# EUROPÄISCHE PATENTSCHRIFT

(11) **EP 1 135 441 B1**
(45) Veröffentlichungstag und Bekanntmachung des Hinweises auf die Patenterteilung: **07.04.2004**
(21) Anmeldenummer: 99955962.8
(22) Anmeldetag: 09.11.1999
(51) Int. Cl.: C08L 101/00, C08L 97/00, B32B 9/02

(54) **VERBUNDKÖRPER MIT DEKORSCHICHTEN**
COMPOSITE BODY WITH DECORATIVE LAYERS
CORPS COMPOSITE COMPORTANT DES COUCHES DECORATIVES

(30) Priorität: 11.11.1998 DE 19852035
(43) Veröffentlichungstag der Anmeldung: 26.09.2001
(73) Patentinhaber: Fraunhofer-Gesellschaft zur Förderung der angewandten Forschung e.V., 80686 München (DE); Tecnaro Gesellschaft zur Industriellen Anwendung Nachwachsender Rohstoffe mbH, 99817 Eisenach (DE)
(72) Erfinder: NÄGELE, Helmut, D-76327 Pfinztal (DE); PFITZER, Jürgen, D-76327 Pfinztal (DE); EYERER, Peter, D-76228 Karlsruhe (DE); EISENREICH, Norbert, D-76327 Pfinztal (DE); ELSNER, Peter, D-76327 Pfinztal (DE); ECKL, Wilhelm, D-76133 Karlsruhe (DE)
(86) Internationale Anmeldenummer: PCT/EP1999/008592
(87) Internationale Veröffentlichungsnummer: WO 2000/027926

(56) Entgegenhaltungen:
- EP-A- 0 644 044
- DE-A- 2 550 768
- DE-A- 3 302 599
- DE-A- 19 706 642
- DE-U- 29 710 825
- GB-A- 2 284 612

## Beschreibung

Die Erfindung betrifft einen Verbundkörper, bestehend aus einem Träger und wenigstens zwei mit diesem verbundenen Dekorschichten aus einem natürlichen Werkstoff.

Derartige Verbundkörper sind bekannt und finden beispielsweise Verwendung als Fußbodenbeläge, wie Parkett, oder als Einlegearbeiten, wie Intarsien, wobei der Träger in der Regel aus Holz- oder Preßspanplatten besteht. Es sind z.B. Parkettafeln aus Weichholzträgern bekannt, auf denen kleine Edelholzdickten unterschiedlicher Formen aufgeleimt sind, wobei zwischen Mosaikparkett mit mosaikartiger Zusammensetzung der aufgeleimten Dickten und Parkettlamellen mit in z.B. quadratischen Mustern aufgeleimten Dickten unterschieden wird.

Bei ornamentalen oder figürlichen Intarsien werden aus einem plattenförmigen Träger aus Holz oder Preßspan entsprechende Ausnehmungen ausgehoben und mit andersfarbigen Materialien, wie Holz, Elfenbein, Perlmut, Schildpatt, Schmuckstein oder Metall gefüllt, wobei die Füllstücke in der Regel ebenfalls eingeleimt werden. Die Fertigung derartiger Verbundkörper, insbesondere für Intarsien, ist aufwendig und teuer, da die Ausnehmungen in der Holz- oder Preßspanplatte durch spanende Bearbeitung unter Einhaltung enger Toleranzen erzeugt werden müssen. Ferner werden zur Herstellung solcher Verbundkörper große Mengen an Klebstoff benötigt. Auch ist häufig ein Überschleifen der Oberfläche erforderlich, um Unebenheiten durch Versatz oder zu hohe Dickentoleranzen der Füllstücke auszugleichen.

Die DE 197 10 825 U1 beschreibt eine Wandverkleidung, wie eine Tapete, aus einem wenigstens zweischichtigen Laminat mit einer dekorativen Papierfolie und einem Träger aus einem biologisch abbaubaren Polymer oder Mischungen solcher Polymere. Als natürliche Polymere kommen z.B. Stärke, Cellulose, Gelatine sowie Lignin und dessen Derivate in Frage. Die Herstellung der Wandverkleidung erfolgt durch Kalandrieren unter erhöhtem Druck und bei erhöhter Temperatur.

Der DE 33 02 599 A1 ist ein mit dekorativen Kunststofffolien beschichteter Holzwerkstoff entnehmbar. Die Dekorfolie kann unter anderem aus natürlichen Polymeren, wie Cellulose, -derivate oder Stärke bzw. Polymerblends solcher Polymere mit synthetischen Polymeren, wie Olefinen oder dergleichen bestehen. Zur Herstellung des Holzwerkstoffs ist vorgesehen, ein Hydroxygruppen enthaltendes Polymer der Kunststoffolie bei erhöhter Temperatur und erhöhtem Druck mittels eines duromeren Klebstoffs zu vernetzen und so mit dem Holzwerkstoff zu verbinden.

In der EP 0 644 044 A1 geht es um ein Verpackungsmaterial aus einem beidseitig folienbeschichteten Naturfaservlies sowie Verfahren zu dessen Herstellung. Die Folien bestehen bevorzugt aus Stärke enthaltenden Materialien. Der Verbund entsteht insbesondere durch Heißpressen.

Die DE 297 06 642 U1 beschreibt schließlich ein mehrschichtiges Verpackungsmaterial und Verfahren zu dessen Herstellung. Das Verpackungsmaterial weist eine Innenschicht aus Naturfaservlies auf, die beidseitig mit einer Deckfolie aus biologisch abbaubaren Polymeren, insbesondere Stärke bzw. stärkehaltigem Material, beschichtet ist. Zur Herstellung des Verpackungsmaterials werden die Schichten bei erhöhtem Druck und erhöhter Temperatur miteinander verpreßt.

Der Erfindung liegt die Aufgabe zugrunde, einen Verbundkörper der eingangs genannten Art vorzuschlagen, der wesentlich kostengünstiger herstellbar ist und eine klebstofffreie Fertigung ermöglicht. Sie ist ferner auf ein Verfahren zur Herstellung eines derartigen Verbundkörpers gerichtet.

Der erste Teil dieser Aufgabe wird erfindungsgemäß mit einem Verbundkörper der eingangs genannten Art dadurch gelöst, daß der Träger im wesentlichen aus wenigstens einem natürlichen thermoplastischen oder thermoelastischen Polymer oder einem Polymer-Blend aus einem solchen Polymer mit wenigstens einem synthetischen thermoplastischen oder thermoelastischen Polymer besteht und zumindest zwei Dekorschichten einander teilweise überdecken oder überlappen.

Durch die Substitution des Holzträgers durch einen aus einem thermoplastischen oder thermoelastischen Polymer bestehenden Träger ist der erfindungsgemäße Verbundkörper insbesondere durch Einpressen der Dekorschichten in den zumindest auf die Temperatur des Fließübergangsbereichs des Polymers erwärmten Träger auf einfache und kostengünstige Weise herstellbar. Die Verbindung zwischen Träger und Dekorschichten wird hierbei einerseits durch Formschluß, andererseits durch das Eindringen der Polymerschmelze zumindest in die unmittelbar angrenzende Oberfläche der in der Regel rauhen oder offenporigen Struktur der Dekorschichten aus natürlichen Werkstoffen erreicht. Auf diese Weise ist eine dauerhafte, feste und klebstofffreie Verbindung gewährleistet. Falls gewünscht, kann der erfindungsgemäße Verbundkörper in den Träger eingepreßte Einlagen aus verschiedenen Dekormaterialien, wie Holzfurnier, Perlmut, Schildpatt, Schmuckstein, Metall, Leder, Kork oder anderen vom Betrachter als ästhetisch empfundenen Materialien aufweisen. Der Träger kann beisielsweise mit mehreren, insbesondere verschiedenfarbigen Holzfurnieren zur Erzielung ornamentaler oder figürlicher Muster beschichtet sein, wobei die Furniere eine ebene oder profilierte Oberfläche bilden können, oder die Furniere sind unter Bildung einer dreidimensionalen Oberfläche in verschiedenen, zum Träger parallelen Ebenen angeordnet. Der Träger kann im wesentlichen plattenförmig sein, aber auch jede andere Form haben, z.B. quaderförmig, zylindrisch etc. ausgebildet sein.

Durch die einander teils überdeckend bzw. überlappend angeordneten Dekorschichten ist der erfindungsgemäße Verbundkörper kostengünstig herstellbar, da die verschiedenen Dekorschichten mit verhältnismäßig großen Toleranzen erzeugt werden können und als Grenzlinie stets nur der Umfang der oberhalb angeordneten Dekorschicht sichtbar ist, während die unterhalb angeordnete Dekorschicht randseitig von der erstgenannten überdeckt ist. Der thermoplastische oder thermoelastische Träger gewährleistet bei Plastifizieren desselben eine Variation der Einpreßtiefe der verschiedenen Dekorschichten, so daß sie entweder im wesentlichen der Stärke einer Dekorschicht und im Überlappungsbereich zweier Dekorschichten der Stärke beider Dekorschichten entspricht, wobei der Verbundkörper nach dem Verpressen eine ebene Oberfläche aufweist, oder die Einpreßtiefe ist etwas geringer als die Dicke zumindest einer Dekorschicht, wobei verschiedenartige Dekorschichten in mehreren parallelen Ebenen liegen können.

Aus der Forderung nach Schonung der Mineralölressourcen, aus denen die Grundstoffe der Kunststoffsynthese gewonnen werden, ergibt sich die Notwendigkeit einer Substitution synthetischer durch natürliche Polymere. Diese Notwendigkeit besteht umso mehr, als bei der häufig einzigen Möglichkeit der Abfallbeseitigung, nämlich der Verbrennung, synthetische Kunststoffe erhebliche CO₂-Emissionen, häufig begleitet von toxischen Emissionen, erzeugen. Aus diesem Grund ist in bevorzugter Ausführung vorgesehen, daß der Träger im wesentlichen aus einem natürlichen Polymer auf der Basis von Lignin besteht. Polymere aus nachwachsenden natürlichen Rohstoffen zeichnen sich durch eine ökologisch neutrale CO₂-Bilanz aus, da bei Verbrennung der natürlichen Polymere der Atmosphäre nicht mehr CO₂ zugeführt wird, als ihr beim Wachstum der Rohstoffe entzogen wurde. Desweiteren sind insbesondere biologisch abbaubare bzw. kompostierbare natürliche Polymere von vorrangigem Interesse, da diese im Vergleich mit den meisten synthetischen Polymeren in einem wesentlich kürzeren Zeitraum und in der Regel rückstandslos abgebaut werden.

Während viele Kunststoffe auf der Grundlage natürlicher Polymere bzw. durch Oxidation, Enzymbehandlung od. dgl. modifizierter natürlicher Polymere schlechtere Werkstoffeigenschaften als synthetische Kunststoffe aufweisen, zeichnet sich Lignin durch eine hohe Festigkeit, Steifigkeit, Schlagzähigkeit sowie durch eine hohe Beständigkeit gegenüber UV-Strahlung aus. Weiterhin ist Lignin ein geeignetes Dämmittel zur Wärme- und Schallisolierung. Lignin ist ein hochmolekulares polyphenolisches Makromolekül, das in verholzenden Pflanzen die Räume zwischen den Zellmembranen ausfüllt und zu Holz werden läßt, wobei ein Mischkörper aus druckfestem Lignin und zugfester Cellulose entsteht. Lignin fällt in großen Mengen als Nebenprodukt bei der Zellstoffgewinnung an und ist somit in großen Mengen verfügbar. Hierbei entstehen beim Aufschluß des Holzes Ligninsulfonsäuren als Bestandteil der Sulfitablaugen, in denen die Ligninsulfonsäuren als Phenolate ("Alkali-Lignin") gelöst sind. Durch Behandlung mit Schwefelsäure und Kohlendioxid kann die Ligninsäure ausgefällt werden. Zur Herstellung des erfindungsgemäßen Verbundkörpers kann aufgrund seiner hohen Verfügbarkeit beispielsweise Alkali-Lignin als Pulver, wie es bei der Aufarbeitung von Abwässern aus der Celluloseverarbeitung durch Verdampfen erhalten und bisher überwiegend verbrannt wird, oder z.B. in Alkoholen, wie Glykol, gelöster Form eingesetzt werden.

Es kann auch ein ligninhaltiges Naturstoffgranulat gemäß der EP 0 720 634 B1 eingesetzt werden, das aus Alkali-Lignin und Proteinen bzw. Proteinderivaten hergestellt und aus einer stereochemischen Modifikation durch Behandlung mit organischen Säuren, insbesondere Essigsäure, hervorgeht und thermoplastisch zu Formteilen verarbeitbar ist. Dieses Material ist verrott- und kompostierbar.

Der Träger des erfindungsgemäßen Verbundkörpers kann auch aus einem Polymer-Blend aus wenigstens einem synthetischen und wenigstens einem natürlichen Polymer insbesondere Lignin, bestehen. Durch die Kombination unterschiedlicher Polymere ist es insbesondere möglich, die für die bestimmungsgemäße Verwendung des Verbundkörpers jeweils günstigen Eigenschaften der beiden Polymerkomponenten kombinatorisch zu nutzen oder die erwünschten Werkstoffeigenschaften einer Polymerkomponente hervorzuheben, während die unerwünschten Werkstoffeigenschaften dieser Komponente je nach Mischungsverhältnis bis zu einem gewissen Grad von der anderen Komponente überdeckt werden. Hierdurch lassen sich Verbundkörper bereitstellen, deren Eigenschaften gezielt auf den jeweiligen technischen Verwendungszweck eingestellt werden können. Besteht der Träger aus einem Polymer-Blend aus einem natürlichen und einem synthetischen Polymer, so kommen für letzeres sämtliche bekannten thermoplastischen oder thermoelastischen Polymere, wie Polyolefine, Polyamide, Polyester, Polyacetate, Polycarbonate, Polyurethane, Vinylpolymere oder Copolymere hiervon in Frage.

Um eine erhöhte Formstabilität zu erzielen, kann der Träger mit Verstärkungsfasern verstärkt sein, wobei aus den genannten Gründen die Verwendung von Naturfasern, wie Hanf-, Cellulose-, Holzfasern od. dgl. bevorzugt ist.

In bevorzugter Ausführung ist vorgesehen, daß vom erfindungsgemäßen Verbundkörper zumindest eine der beiden Dekorschichten ein Holzfurnier ist. Eine weitere Ausführungsform sieht vor, daß der Verbundkörper zusätzlich zumindest eine Dekorschicht in Form eines Vlieses, Geflechts, Gewebes, Gewirkes, Gestrickes, Geleges od. dgl. aus Naturfasern aufweist. Im erstgenannten Fall kann der Verbundkörper ferner zwischen dem Träger und dem Holzfurnier ein Vlies, Geflecht, Gewebe, Gewirke, Gestricke, Gelege od. dgl. aufweisen. Vorzugsweise besteht dieses aus Naturfasern, so daß der erfindungsgemäße Verbundkörper insbesondere in Verbindung mit einem Träger auf der Basis von Lignin vollständig aus Naturstoffen besteht. Das Vlies, Geflecht, Gewebe, Gewirke, Gestricke oder Gelege kann beispielsweise aus Flachs-, Sisal-, Ramie-, Miscanthus-, Cellulose- oder Holzfasern bestehen. In bevorzugter Ausführung ist die Verwendung von Hanffasern vorgesehen, da diese im Vergleich mit anderen Naturfasern hochwertige Werkstoffeigenschaften, wie eine hohe Zugfestigkeit, aufweisen. Das Geflecht, Gewebe, Gewirke, Gestricke oder Gelege dient einerseits als Haftvermittler zwischen dem Träger und dem Holzfurnier und verhindert andererseits beispielsweise ein Durchschlagen der Polymerschmelze beim Preßvorgang.

Der erfindungsgemäße Verbundkörper ist für viele Verwendungszwecke geeignet. Er bietet sich aufgrund seines Eigenschaftsspektrums, seiner Farbe und seiner Konsistenz als Ersatz für zur Gänze aus Holz oder Holzwerkstoffen bestehender Verbundkörper an. Aufgrund der guten wärmeund schalldämmenden Eigenschaften von Lignin ist der Verbundkörper insbesondere für Fußbodenbeläge, wie Parkett, für Wand- und Deckenverkleidungen od. dgl. geeignet.

Der erfindungsgemäße Verbundkörper eignet sich desweiteren insbesondere für Einlegearbeiten, wie Intarsien, indem die im allgemeinen aus Holz oder Preßspan bestehende Grundplatte durch den aus wenigstens einem natürlichen und/oder synthetischen thermoplastischen oder thermoelastischen Polymer bestehenden, z.B. plattenförmigen Träger ersetzt wird. Der erfindungsgemäße Verbundkörper eignet sich beispielsweise als ornamentale Sichtseite von Möbeln, Musikinstrumenten, Gehäusen jeglicher Art, von Fahrzeuginnenverkleidungen und -ausstattungen, wie Armaturenbrettern, Lenkrädern, Mittelkonsolen od. dgl.

Die Erfindungsaufgabe wird durch ein Verfahren zur Herstellung eines gattungsgemäßen Verbundkörpers dadurch gelöst, daß mehrere Dekorschichten einander teilweise überdeckend oder überlappend in den aus wenigstens einem natürlichen thermoplastischen oder thermoelastischen Polymer oder einem Polymer-Blend aus einem solchen Polymer mit wenigstens einem synthetischen thermoplastischen oder thermoelastischen Polymer bestehenden Träger bei erhöhtem Druck und erhöhter Temperatur eingepreßt werden.

Insbesondere ist vorgesehen, daß die Dekorschichten in eine Heißpresse eingelegt, der Träger aufgelegt und durch Schließen der Presse die Dekorschichten gemeinsam in die Oberfläche des Trägers eingepreßt werden.

Dadurch lassen sich Dekorschichten und gegebenenfalls weitere vorzugsweise natürliche Materialien, wie Holz, Elfenbein, Perlmut, Schildpatt, Schmucksteine od. dgl. in den Träger einbringen, ohne daß bei der Herstellung der Dekorschichten enge Toleranzen eingehalten werden müssen und ohne daß eine aufwendige Vorbehandlung des Trägers, wie beispielsweise das Ausheben von Vertiefungen, erforderlich ist. Besteht der Träger hierbei insbesondere aus Lignin, so vermittelt der Verbundkörper aufgrund des holzartigen Charakters des Lignins ein holzartiges Aussehen sowie eine holzartige Haptik.

Der Preßdruck beträgt je nach verwendetem Polymer bzw. je nach verwendeter Polymermischung des Trägers vorzugsweise zwischen 40 und 400 bar. Die Preßtemperatur beträgt vorzugsweise zwischen 120 und 180°C und entspricht wenigstens der Temperatur des Schmelzübergangsbereichs des für den Träger verwendeten Polymers.

Wie bereits erwähnt, kann die Einpreßtiefe der einander teils überdeckenden oder überlappenden Dekorschichten variiert werden, so daß sie entweder im wesentlichen der Stärke einer Dekorschicht und im Überdeckungsbereich zweier Dekorschichten der Stärke beider Dekorschichten entspricht, wobei der Verbundkörper eine ebene Oberfläche aufweist, oder die Einpreßtiefe wird etwas kleiner als die Dicke zumindest einer Dekorschicht gewählt, wobei verschiedenartige Dekorschichten in mehreren parallelen Ebenen liegen können, was insbesondere bei Intarsien optisch beeindruckend ist.

In bevorzugter Ausführung ist vorgesehen, daß insbesondere nach dem Einlegen zumindest einer Dekorschicht in Form von Holzfurnieren in die Heißpresse auf diese ein Geflecht, Gewebe, Gewirke, Gestricke, Gelege od. dgl., insbesondere aus Naturfasern, aufgebracht wird, um ein Durchschlagen der Polymerschmelze oder flüssiger Komponente derselben auf die Oberfläche der Dekorschicht zu verhindern und einen festen, klebstofffreien Verbund zu gewährleisten.

Auf zumindest eine Dekorschicht kann bei Verwendung von Holzfurnieren beispielsweise auch eine Oberflächenstruktur aufgeprägt werden, indem z.B. ein Profil auf der dem Furnier zugeordneten Innenfläche der Heißpresse beim Schließen derselben in das Furnier eindringt. Somit können z.B. durch Modifikation der dem Furnier zugeordneten Innenfläche der Heißpresse rauhe oder lederartige Oberflächen der Dekorschicht erzielt werden, ohne daß ein zusätzlicher Verfahrensschritt erforderlich ist.

Der Träger kann vor Einpressen der Dekorschicht mit insbesondere natürlichen Verstärkungsfasern, wie Hanf-, Cellulose, Holzfasern od. dgl., versetzt werden.

Nachfolgend ist die Erfindung anhand eines in der Zeichnung gezeigten Ausführungsbeispiels in Form einer aus einem erfindungsgemäßen Verbundkörper bestehenden Einlegearbeit, z.B. eines Schachbretts erläutert.

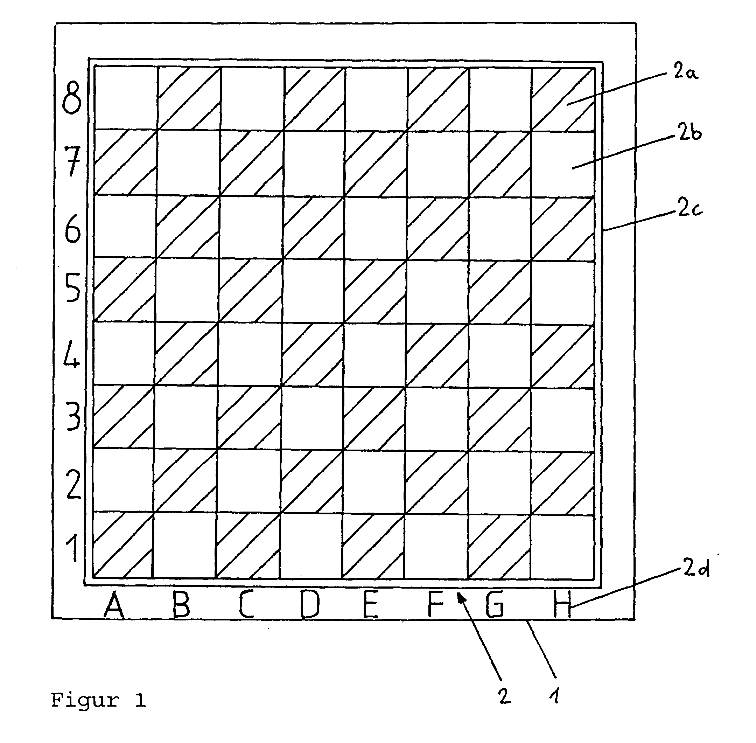

Der in Fig. 1 dargestellte erfindungsgemäße Verbundkörper besteht aus einem plattenförmigen Träger 1 aus Lignin sowie mehreren, in den Träger 1 eingepreßten mehrfarbigen, schachbrettartig angeordneten Holzfurnieren 2. Hierbei können die dunklen Furniere 2a beispielsweise aus Wurzelholz und die hellen Furniere 2b beispielsweise aus Ahornholz bestehen und die dunklen Furniere 2a an ihrer dem Träger 1 zugewandten Seite überlappen. Auf diese Weise werden die tiefer in den Träger 1 als die hellen Furniere 2b eindringenden Ränder der dunklen Furniere 2a von den hellen Furnieren 2b überdeckt und erfordert die Herstellung der Furniere 2a, 2b nicht die Einhaltung sehr enger Toleranzen. Die das schachbrettförmige Muster begrenzenden Leisten 2c können direkt von dem Träger, insbesondere aus Lignin, gebildet sein, während die Felderkennungen 2d beispielsweise aus einem Furnier aus Kirschbaum zugeschnitten sind. Der gezeigte Verbundkörper weist eine ebene Oberfläche auf, was auf einfache Weise durch einander überlappendes Einlegen der einzelnen Furniere 2a, 2b und 2d in eine Heißpresse und anschliessendes Verpressen mit dem Träger 1 erreicht werden kann. Zwischen dem Träger und dem Holzfurnier 2 kann beispielsweise ein Gewebe aus Hanffasern angeordnet sein, welches ein Durchschlagen des plastifizierten Lignins bzw. seiner leichtflüchtigen Komponenten auf die Oberfläche beim Preßvorgang verhindert und einen festen Verbund gewährleistet.

## Patentansprüche

1. Verbundkörper, bestehend aus einem Träger und wenigstens zwei mit diesem verbundenen Dekorschichten aus einem natürlichen Werkstoff, **dadurch gekennzeichnet, daß** der Träger im wesentlichen aus wenigstens einem natürlichen thermoplastischen oder thermoelastischen Polymer oder einem Polymer-Blend aus einem solchen Polymer mit wenigstens einem synthetischen thermoplastischen oder thermoelastischen Polymer besteht und zumindest zwei Dekorschichten einander teilweise überdecken oder überlappen.

2. Verbundkörper nach Anspruch 1, **dadurch gekennzeichnet, daß** der Träger aus einem natürlichen Polymer auf der Basis von Lignin besteht.

3. Verbundkörper nach Anspruch 1, **dadurch gekennzeichnet, daß** der Träger wenigstens ein Polyolefin, Polyamid, Polyester, Polyacetat, Polycarbonat, Polyurethan, Vinylpolymer oder Copolymer hiervon enthält.

4. Verbundkörper nach Anspruch 3, **dadurch gekennzeichnet, daß** der Träger ein natürliches Polymer auf der Basis von Lignin enthält.

5. Verbundkörper nach einem der Ansprüche 1 bis 4, **dadurch gekennzeichnet, daß** der Träger mit Naturfasern, wie Hanf-, Cellulose-, Holzfasern od. dgl., verstärkt ist.

6. Verbundkörper nach einem der Ansprüche 1 bis 5, **dadurch gekennzeichnet, daß** zumindest eine Dekorschicht ein Holzfurnier aufweist.

7. Verbundkörper nach einem der Ansprüche 1 bis 6, **dadurch gekennzeichnet, daß** zumindest eine Dekorschicht ein Vlies, Geflecht, Gewebe, Gewirke, Gestricke, Gelege od. dgl. aus Naturfasern aufweist.

8. Verbundkörper nach Anspruch 6, **dadurch gekennzeichnet, daß** zwischen dem Träger und dem Holzfurnier ein Vlies, Geflecht, Gewebe, Gewirke, Gestricke, Gelege od. dgl. angeordnet ist.

9. Verbundkörper nach Anspruch 8, **dadurch gekennzeichnet, daß** das Vlies, Geflecht, Gewebe, Gewirke, Gestricke oder Gelege aus Naturfasern besteht.

10. Verbundkörper nach Anspruch 9, **dadurch gekennzeichnet, daß** die Naturfasern Hanffasern sind.

11. Verwendung eines Verbundkörpers gemäß einem der Ansprüche 1 bis 10 für Fußbodenbeläge, insbesondere Parkett.

12. Verwendung eines Verbundkörpers gemäß einem der Ansprüche 1 bis 10, für Wand- oder Deckenverkleidungen.

13. Verwendung eines Verbundkörpers nach einem der Ansprüche 1 bis 10 für Einlegearbeiten, insbesondere Intarsien.

14. Verwendung nach Anspruch 13 für die Sichtseiten von Möbeln, Musikinstrumenten, Gehäusen, Innenverkleidung und -ausstattung von Kraftfahrzeugen.

15. Verfahren zur Herstellung eines Verbundkörpers gemäß einem der Ansprüche 1 bis 10, **dadurch gekennzeichnet, daß** mehrere Dekorschichten einander teilweise überdeckend oder überlappend in den aus wenigstens einem natürlichen thermoplastischen oder thermoelastischen Polymer oder einem Polymer-Blend aus einem solchen Polymer mit wenigstens einem synthetischen thermoplastischen oder thermoelastischen Polymer bestehenden Träger bei erhöhtem Druck und erhöhter Temperatur eingepreßt werden.

16. Verfahren nach Anspruch 15, **dadurch gekennzeichnet, daß** die Dekorschichten in eine Heißpresse eingelegt, der Träger aufgelegt und durch Schließen der Presse die Dekorschichten gemeinsam in die Oberfläche des Trägers eingepreßt werden.

17. Verfahren nach Anspruch 15 oder 16, **dadurch gekennzeichnet, daß** der Preßdruck zwischen 40 und 400 bar beträgt.

18. Verfahren nach einem der Ansprüche 15 bis 17, **dadurch gekennzeichnet, daß** die Preßtemperatur zwischen 120 und 180°C beträgt.

19. Verfahren nach einem der Ansprüche 15 bis 18, **dadurch gekennzeichnet, daß** die Einpreßtiefe zumindest einer Dekorschicht im wesentlichen der Dicke dieser Dekorschicht entspricht.

20. Verfahren nach einem der Ansprüche 15 bis 18, **dadurch gekennzeichnet, daß** die Einpreßtiefe zumindest einer Dekorschicht kleiner als deren Dicke ist.

21. Verfahren nach einem der Ansprüche 15 bis 20, **dadurch gekennzeichnet, daß** mehrere Dekorschichten unterschiedlicher Art in die Heißpresse eingelegt und gemeinsam mit dem Träger verpreßt werden.

22. Verfahren nach einem der Ansprüche 15 bis 21, **dadurch gekennzeichnet, daß** in die Heißpresse nach Einlegen zumindest einer Dekorschicht eine Schicht aus Fasern eingelegt wird und diese zusammen mit dem Träger verpreßt werden.

23. Verfahren nach einem der Ansprüche 15 bis 22, **dadurch gekennzeichnet, daß** auf zumindest eine Dekorschicht eine Oberflächenstruktur aufgeprägt wird.

24. Verfahren nach einem der Ansprüche 15 bis 23, **dadurch gekennzeichnet, daß** der Träger mit natürlichen Verstärkungsfasern wie Hanf-, Cellulose, Holzfasern od. dgl. versetzt wird.

## Claims

1. Composite body comprising a support and at least two decorative layers joined to this composed of a natural substance, **characterised in that** the support is essentially composed of at least one natural thermoplastic or thermoelastic polymer or a polymer blend comprising such a polymer with at least one synthetic thermoplastic or thermoelastic polymer, and at least two decorative layers partially cover or overlap one another.

2. Composite body according to Claim 1, **characterised in that** the support is composed of a lignin-based natural polymer.

3. Composite body according to Claim 1, **characterised in that** the support contains at least a polyolefine, polyamide, polyester, polyacetate, polycarbonate, polyurethane, vinyl polymer or copolymer thereof.

4. Composite body according to Claim 3, **characterised in that** the support contains a lignin-based natural polymer.

5. Composite body according to one of Claims 1 to 4, **characterised in that** the support is reinforced with natural fibres such as hemp, cellulose, wood fibres or similar.

6. Composite body according to one of Claims 1 to 5, **characterised in that** at least one decorative layer has a wood veneer.

7. Composite body according to one of Claims 1 to 6, **characterised in that** at least one decorative layer has a nonwoven, braided, woven, textile, knitted, interlaid scrim or similar material composed of natural fibres.

8. Composite body according to Claim 6, **characterised in that** a nonwoven, braided, woven, textile, knitted, interlaid scrim or similar material is arranged between the support and the wood veneer.

9. Composite body according to Claim 8, **characterised in that** the nonwoven, braided, woven, textile, knitted or interlaid scrim material is composed of natural fibres.

10. Composite body according to Claim 9, **characterised in that** the natural fibres are hemp fibres.

11. Use of a composite body according to one of Claims 1 to 10 for floor coverings, in particular parquet flooring.

12. Use of a composite body according to one of Claims 1 to 10 for wall or ceiling cladding.

13. Use of a composite body according to one of Claims 1 to 10 for inlaid work, in particular marquetry.

14. Use according to Claim 13 for the visible sides of furniture, musical instruments, housings, interior lining and fittings of motor vehicles.

15. Process for the production of a composite body according to one of Claims 1 to 10, **characterised in that** several decorative layers are pressed into the support, which is composed of at least one natural thermoplastic or thermoelastic polymer or a polymer blend comprising such a polymer with at least one synthetic thermoplastic or thermoelastic polymer, at elevated pressure and elevated temperature so that they partially cover or overlap one another.

16. Process according to Claim 15, **characterised in that** the decorative layers are laid in a hot press, the support placed on them, and the decorative layers are pressed together into the surface of the support by closing the press.

17. Process according to Claim 15 or 16, **characterised in that** the pressing pressure amounts to between 40 and 400 bar.

18. Process according to one of Claims 15 to 17, **characterised in that** the pressing temperature amounts to between 120° and 180°C.

19. Process according to one of Claims 15 to 18, **characterised in that** the depth to which at least one decorative layer is pressed in essentially corresponds to the thickness of this decorative layer.

20. Process according to one of Claims 15 to 18, **characterised in that** the depth to which at least one decorative layer is pressed in is smaller than its thickness.

21. Process according to one of Claims 15 to 20, **characterised in that** several decorative layers of different type are laid in the hot press and pressed together with the support.

22. Process according to one of Claims 15 to 21, **characterised in that** after at least one decorative layer has been laid in the hot press, a layer of fibres is laid therein and these are pressed together with the support.

23. Process according to one of Claims 15 to 22, **characterised in that** a surface structure is stamped onto at least one decorative layer.

24. Process according to one of Claims 15 to 23, **characterised in that** the support has added natural reinforcing fibres such as hemp, cellulose, wood fibres or similar.

## Revendications

1. Corps composite constitué d'un support et d'au moins deux couches décoratives liées à ce support et faites d'une matière naturelle,
**caractérisé en ce que**
le support est composé essentiellement d'au moins un polymère naturel thermoplastique ou thermoélastique ou d'un mélange d'un tel polymère avec au moins un polymère synthétique thermoplastique ou thermoélastique, et au moins deux couches décoratives se recouvrent l'une l'autre au moins en partie.

2. Corps composite selon la revendication 1,
**caractérisé en ce que**
le support est composé d'un polymère naturel à base de lignine.

3. Corps composite selon la revendication 1,
**caractérisé en ce que**
le support contient au moins une polyoléfine, une polyamide, un polyester, un polyacétate, un polycarbonate, un polyuréthane, un polymère ou un copolymère de vinyle.

4. Corps composite selon la revendication 3,
**caractérisé en ce que**
le support contient un polymère naturel à base de lignine.

5. Corps composite selon l'une des revendications 1 à 4,
**caractérisé en ce que**
le support est renforcé par des fibres naturelles telles que des fibres de chanvre, de cellulose, de bois ou similaires.

6. Corps composite selon l'une des revendications 1 à 5,
**caractérisé en ce qu'**
au moins une couche décorative présente un placage en bois.

7. Corps composite selon l'une des revendications 1 à 6,
**caractérisé en ce qu'**
au moins une couche décorative présente un non-tissé, un treillis, un tissu, un maillage, un tricot, une couche ou similaire, en fibres naturelles.

8. Corps composite selon la revendication 6,
**caractérisé en ce qu'**
entre le support et le placage de bois est monté un non-tissé, un treillis, un tissu, un maillage, un tricot, une couche ou similaire.

9. Corps composite selon la revendication 8,
**caractérisé en ce que**
le non-tissé, le treillis, le tissu, le maillage, le tricot ou la couche est en fibres naturelles.

10. Corps composite selon la revendication 9,
**caractérisé en ce que**
les fibres naturelles sont des fibres de chanvre.

11. Utilisation d'un corps composite selon l'une des revendications 1 à 10, pour des revêtements de sol, en particulier du parquet.

12. Utilisation d'un corps composite selon l'une des revendications 1 à 10, pour des revêtements de paroi ou de plafond.

13. Utilisation d'un corps composite selon l'une des revendications 1 à 10, pour des travaux d'incrustation, notamment pour de la marqueterie.

14. Utilisation selon la revendication 13, pour les faces visibles de meubles, d'instruments de musique, de boîtes et pour la réalisation et le revêtement de garnitures internes d'automobiles.

15. Procédé de fabrication d'un corps composite selon l'une des revendications 1 à 10,
**caractérisé en ce que**
plusieurs couches décoratives se recouvrant totalement ou partiellement sont enfoncées sous haute pression élevée et à température élevée dans le support constitué d'au moins un polymère naturel thermoplastique ou thermoélastique ou d'un mélange d'un tel polymère avec au moins un polymère synthétique thermoplastique ou thermoélastique.

16. Procédé selon la revendication 15,
**caractérisé en ce que**
les couches décoratives sont introduites dans une presse chauffante, le support est déposé et, par la fermeture de la presse, les couches décoratives sont incorporées par pression à la surface du support.

17. Procédé selon la revendication 15 ou 16,
**caractérisé en ce que**
la pression de pressage est comprise entre 40 et 400 bars.

18. Procédé selon l'une des revendications 15 à 17,
**caractérisé en ce que**
la température de pressage est comprise entre 120 et 180°.

19. Procédé selon l'une des revendications 15 à 18,
**caractérisé en ce que**
la profondeur d'enfoncement d'au moins une couche décorative correspond essentiellement à l'épaisseur de cette couche.

20. Procédé selon l'une des revendications 15 à 18,
**caractérisé en ce que**
la profondeur d'enfoncement d'au moins une couche décorative est inférieure à l'épaisseur de cette couche.

21. Procédé selon l'une des revendications 15 à 20,
**caractérisé en ce que**
plusieurs couches décoratives de genres différents sont introduites dans la presse chauffante et comprimées ensemble avec le support.

22. Procédé selon l'une des revendications 15 à 21,
**caractérisé en ce qu'**
après dépôt dans la presse chauffante d'au moins une couche décorative, une couche de fibres est déposée et les couches sont comprimées ensemble avec le support.

23. Procédé selon l'une des revendications 15 à 22,
**caractérisé en ce que**
sur au moins une couche décorative est réalisée par empreinte une couche superficielle.

24. Procédé selon l'une des revendications 15 à 23,
**caractérisé en ce que**
le support est mélangé à des fibres naturelles de renforcement telles que des fibres de chanvre, de cellulose, de bois ou similaires.
